# NEUE EUROPÄISCHE PATENTSCHRIFT

(11) **EP 0 679 863 B2**
(45) Veröffentlichungstag und Bekanntmachung des Hinweises auf die Entscheidung über den Einspruch: **06.10.2004**
(45) Hinweis auf die Patenterteilung: 26.05.1999
(21) Anmeldenummer: 95102925.5
(22) Anmeldetag: 02.03.1995
(51) Int. Cl.: G01B 7/312, G01B 7/12, G01B 7/06

(54) **Vorrichtung zur Messung der Lage eines Leiterstrangs eines Kabels im Kabelmantel**
Device for measuring the position of a conductor of a cable within a cable covering
Dispositif de mesure de la position d'un conducteur d'un câble dans la gaine de câble

(30) Priorität: 08.04.1994 DE 4412122
(43) Veröffentlichungstag der Anmeldung: 02.11.1995
(73) Patentinhaber: SIKORA INDUSTRIEELEKTRONIK GMBH, D-28307 Bremen (DE)
(72) Erfinder: Sikora, Harald, D-28357 Bremen (DE)
(74) Vertreter: Patentanwälte Hauck, Graalfs, Wehnert, Döring, Siemons, Schildberg

(56) Entgegenhaltungen:
- EP-A- 0 457 316
- DD-A1- 158 431
- DE-C- 3 019 034
- FR-A- 2 166 199
- GB-A- 2 003 613
- GB-A- 2 160 654
- US-A- 3 288 895
- US-A- 3 459 851
- US-A- 3 748 577
- US-A- 3 812 424
- US-A- 4 780 662
- Firmenbröschüre "Kapazitätsmessgerät CMC 2000" der SIKORA Industrieelektronik GmbH, Bremen, 1991
- Bierenfeld et al.: "Capacitance probe for use in capacitance monotoring system for controlling coaxial capcitance of insulated conductors" Technical Digest No.44, October 1976
- Firmenbroschüre "Kapazitätsmessgerät CMC 2000" der SIKORA Industrieelektronik GmbH, Bremen, 1991

## Beschreibung

Die Erfindung bezieht sich auf eine Vorrichtung zur Messung der Verlagerung eines Leiters eines Kabels in einem Kabelmantel nach dem Oberbegriff des Patentanspruchs 1.

Bei der Herstellung von Kabeln wird der Kabelmantel normalerweise mit Hilfe eines Extruders auf einen Leiterstrang aufgebracht. Je nach Einsatzfall setzt sich der Kabelmantel auch aus mehreren Schichten zusammen, die konzentrisch auf den Strang aufgebracht werden. Bei der Herstellung von Kabeln ist von Bedeutung, daß der Kabelmantel zum einen den erforderlichen Durchmesser aufweist, mithin die geforderten elektrischen Eigenschaften besitzt, insbesondere eine ausreichende Isolierung bereitstellt. Zum anderen ist wesentlich, daß der Leiter zentrisch im Kabelmantel verläuft. Bei auftretender Exzentrizität ist trotz des Solldurchmessers die erforderliche Isolation nicht mehr gewährleistet.

Aus der DE 25 17 709 ist bekanntgeworden, die Exzentrizität mit Hilfe einer Induktionsmessung zu ermitteln. Induktive Sensoren, die im Umfangsabstand um das Kabel herum angeordnet sind, sprechen auf das Magnetfeld an, daß ein im Leiterstrang eingeprägter Strom erzeugt. Mit Hilfe optischer Anordnungen läßt sich die Lage des Kabelmantels bestimmen.

Um die Regelungszeiten so klein wie möglich zu halten, ist aus der DE 34 03 956 auch bekanntgeworden, die induktiven Meßspulen unmittelbar am Extruderkopf anzuordnen.

Die beschriebenen Meßverfahren arbeiten berührungslos. Aus der DE 40 15 692 ist bekanntgeworden, eine mit dem Kabel mitlaufende, quer zur Drehachse nachgebend gelagerte Hohlrolle vorzusehen, in der ein Sensor in definiertem Abstand zur Außenwand der Hohlrolle angeordnet ist. Der Sensor kann ein induktiver oder auch ein kapazitiver Sensor sein, der vom elektrischen Feld beeinflußt wird, das ein durch den Leiterstrang fließender Strom erzeugt.

Aus der Firmenschrift System IMP 7000 der Firma Buhl Automatik ist bekanntgeworden, die Lage eines Leiters in einem Kabelmantel mit Hilfe eines Ultraschallsensors festzustellen, wobei der Sensor in Form eines Ultraschallrades von einem Scanner über die Oberfläche des Kabels geführt ist.

Aus der Firmenschrift "Kapazitätsmeßgerät CMC 2000" der Firma Sikora Industrieelektronik ist ein Kapazitätsmeßgerät bekanntgeworden, das aus einem zylindrischen mit Wasser gefüllten Behälter besteht, durch den das Kabel hindurchbewegt wird, wobei die Kapazität zwischen der Wandung des Behälters und dem Leiterstrang durch Erfassung des Stroms gemessen wird, der von einer an die Behälterwandung angelegten Wechselspannung höherer Frequenz erzeugt wird. Mit Hilfe eines geeigneten Strommeßgerätes wird der Strom von einer zylindrischen Meßelektrode zum Leiter gemessen, der sich im Zentrumder Meßelektrode befindet. Der Meßstrom ist mithin ein Maß für die Kapazität der Isolation.

Aus FR-A-2 166 199 ist eine Vorrichtung bekanntgeworden zur Messung sowohl der exzentrischen Verlagerung des Leiters eines Kabelmantels als auch der Kapazität. Zu diesem Zweck sind vier bogenförmige Elektroden zylinderartig angeordnet, wobei das Kabel durch die Längsachse eines derartigen Zylinders hindurchgeführt ist. Durch die Messung des Stroms zwischen dem Leiter und den Elektrodensegmenten läßt sich zum einen die Kapazität des Kabels und zum anderen die Verlagerung des Leiters ermitteln.

Die beschriebenen bekannten Vorrichtungen arbeiten zum Teil zufriedenstellend, sind jedoch verhältnismäßig aufwendig.

Der Erfindung liegt daher die Aufgabe zugrunde, eine Vorrichtung zur Messung der Verlagerung des Leiters eines Kabels im Kabelmantel zu schaffen, die trotz präziser Messung einfach bedienbar und robust ist sowie einen sehr geringen Herstellungsaufwand erfordert.

Diese Aufgabe wird durch die Merkmale des Patentanspruchs 1 gelöst.

Bei der erfindungsgemäßen Vorrichtung wird das Kabel durch einen mit Wasser gefüllten zylindrischen Behälter gezogen.

Die Wandung des Behälters besteht aus mindestens drei in Umfangsrichtung voneinander elektrisch isolierten Elektrodensegmente bildenden Umfangswandabschnitten, die entweder mit einer Hochfrequenzquelle oder mit Erde verbunden sind, während der Leiter mit Erde oder der Hochfrequenzquelle verbunden ist. Die Elektrodensegmente sind von einer zylindrischen Elektrode umgeben, die auf gleichem Potential wie die Elektrodensegmente liegt. Die zylindrische Elektrode kann von einer zweiten zylindrischen Elektrode umgeben sein, die auf Erdpotential liegt. Mit Hilfe geeigneter Strommeßgeräte wird nun der Strom zu jedem Elektrodensegment gemessen. Die Größe des Stroms ist dabei abhängig von der Kapazität zwischen dem Elektrodensegment und dem z.B. auf Erdpotential liegenden Leiterstrang.

Die zwischen dem Elektrodensegment und dem Leiter gebildete Kapazität ergibt sich als Reihenschaltung der Teilkapazitäten der Wasserstrecke und der Isolation. Diese sind bei zentrischer Lage von Kabel und Leiter in bekannter Weise abhängig von der Dielektrizitätskonstanten und dem Verhältnis Außen- zu innenradius der jeweiligen Schicht. Eine exzentrische Verlagerung des Kabels im Wasser oder des Leiters im Kabel verändert den Wert der jeweiligen Teilkapazität. Aufgrund der wesentlich größeren relativen Dielektrizitätskonstanten der Wasserstrecke, etwa 80 gegenüber etwa 2,3 bei beispielsweise Polyethylen, wirkt sich in der "Reihenschaltung" eine Veränderung der wesentlich größeren Wasserkapazität nur unerheblich auf die Gesamtkapazität aus. Hingegen beeinflußt eine Verlagerung des Leiters im Kabel eine meßbare Kapazitätsänderung und damit auch eine meßbare Stromänderung. Weichen mithin die Stromwerte für die einzelnen Elektrodensegmente voneinander ab, ist dies ein Anzeichen dafür, daß Exzentrizität vorliegt. Mit Hilfe der in einer geeigneten Auswertevorrichtung vorgenommenen Auswertung der Strommeßwerte können dann Schritte unternommen werden, um die Zentrizität wieder herzustellen. Dies kann zum Beispiel dadurch geschehen, daß die motorisch gesteuerten Werkzeuge des Extruders ein Korrektursignal erhalten.

Die erfindungsgemäße Vorrichtung ist äußerst einfach aufgebaut, sehr einfach bedienbar, wenig störanfällig und ermöglicht die Erfassung zweier wesentlicher Parameter eines Elektrokabels. Schließlich läßt sich die erfindungsgemäße Vorrichtung auch zu einer sogenannten Blankstellenerkennung verwenden. Befindet sich an einer Stelle überhaupt kein Isoliermaterial oder nur ein dünner Überzug, dann kann dies durch sprunghaften Stromanstieg registriert werden.

Die Erfindung wird nachfolgend anhand einer Zeichnung näher erläutert.

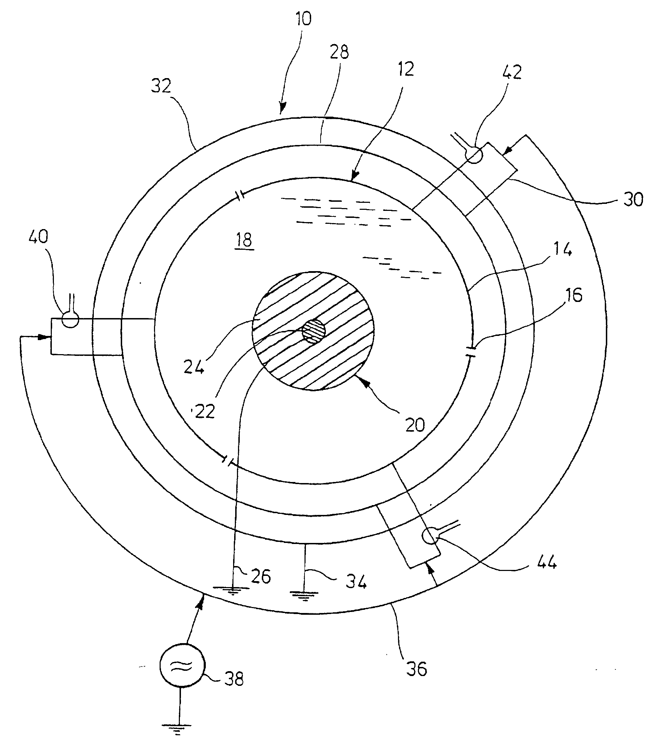

Die einzige Figur zeigt schematisch ein Ausführungsbeispiel für eine Vorrichtung nach der Erfindung.

Das dargestellte Meßgerät 10 weist einen zylindrischen Behälter 12 auf, dessen Wandung drei Umfangsabschnitte aufweist, die Elektrodensegmente 14 bilden. Ihre Umfangserstreckung ist 120°. Die Elektrodensegmente 14 sind voneinander elektrisch isoliert, wie bei 16 angedeutet. Der Behälter 12 ist mit Wasser 18 gefüllt, und ein Kabel 20 ist mittig entlang der Achse des Behälters 12 geführt. Das Kabel im hier dargestellten Ausführungsbeispiel besitzt einen Leiter 22 und einen Kabelmantel 24 aus isolierendem Material, beispielsweise Polyethylen. Der Leiter ist, wie bei 26 angedeutet, an Erdpotential gelegt.

Um den Behälter 12 herum in radialem Abstand ist eine zylindrische Elektrode 28 angeordnet. Sie liegt, wie durch die Leiterverbindungen 30 angedeutet, auf gleichem Potential wie die Elektrodensegmente 14. Um die erste zylindrische Elektrode 28 herum ist ggf. eine weitere zylindrische Elektrode 32 als Abschirmung in radialem Abstand angeordnet. Sie ist, wie bei 34 angedeutet, auf Erdpotential gelegt.

Die Leiterverbindungen 30 liegen an einer gemeinsamen Leitung 36, die ihrerseits mit einer Hochfrequenzspannungsquelle 38 verbunden ist. Die Frequenz beträgt zum Beispiel 20 kHz, und die Spitzenspannung ist etwa 20 Volt.

Den Leiterverbindungen 30 ist außerdem jeweils eine Strommeßvorrichtung 40, 42 bzw. 44 zugeordnet, die den Strom mißt, den die Wechselspannungsquelle 38 erzeugt. Dieser Strom ist abhängig von der Kapazität des Kondensators, der zwischen dem Leiter 22 und den Elektrodensegmenten 14 gebildet ist. Die Kapazität hängt wiederum von den Dielektrizitätskonstanten ab, d.h. im vorliegenden Fall von der von Wasser und von der des Kabelmantels 24. Die von Wasser beträgt etwa 80 und die des Kabelmantels zum Beispiel 2,3. Die relativ hohe Dielektrizitätskonstante für Wasser bedingt, daß Abweichungen von der koaxialen Lage beim Hindurchführen des Kabels 20 durch den Behälter 12 sich nur in geringen Fehlern äußern. Mithin führt eine Verlagerung des Leiters 22 im Kabelmantel 24 zu unterschiedlich hohen Stromwerten, je nachdem, zu welcher Seite diese Verlagerung stattgefunden hat. Bei einer zentrischen Anordnung des Leiters 22 sind die Stromwerte gleich. Sind sie jedoch unterschiedlich, kann daraus die Verlagerung ermittelt werden. Mit Hilfe einer nicht gezeigten Auswertevorrichtung kann diese Verlagerung angezeigt und auch in ein Steuer- oder Regelsignal für die Werkzeuge eines Extruders umgewandelt werden.

Die gezeigte Vorrichtung eignet sich auch zur Bestimmung der Kapazität des Kabels 20 sowie zur sogenannten Blankstellenerkennung. Bei der Kapazitätsbestimmung werden die Strommeßwerte für alle Elektrodensegmente 14 aufsummiert. Bei der Blankstellenerkennung spricht eine Schwellwertstufe an, wenn der Strom bezüglich eines oder zweier Elektrodensegmente 14 einen vorgegebenen Wert übersteigt. Die einzelnen Stufen der Auswertevorrichtung sind in der Zeichnung nicht dargestellt.

## Patentansprüche

1. Vorrichtung zur Messung der exzentrischen Verlagerung des Leiters (22) eines Kabels (20) im Kabelmantel (24), mit mindestens drei am Umfang des Kabels (20) versetzt angeordneten kreisbogenförmigen, auf einem Kreis um das Kabel (20) angeordneten, gegeneinander isolierten, elektrisch leitenden Elektrodensegmenten (14), einer Hochfrequenzspannungsquelle (38) zur Erzeugung eines Wechselfeldes zwischen dem Leiter (22) und den Elektrodensegmenten (14) und einer Auswertevorrichtung, die aus der Höhe des Stroms zwischen dem Leiter (22) und den Elektrodensegmenten (14) die Größe der Verlagerung des Leiters (22) ermittelt, **dadurch gekennzeichnet, daß** ein mit Wasser gefüllter zylindrischer Behälter (12) vorhanden ist, dessen Wandung von den Elektrodensegmenten (14) gebildet ist, die Elektrodensegmente (14) von einer zylindrischen Elektrode (28) umgeben sind, die auf gleichem Potential wie die Elektrodensegmente (14) liegt und den Elektrodensegmenten (14) jeweils eine Strommeßvorrichtung (40, 42, 44) zugeordnet ist zur Messung des zu den einzelnen Elektrodensegmenten (14) fließenden Stroms, wobei die Hochfrequenzspannungsquelle (38) mit den Elektrodensegmenten (14) verbunden ist und der Leiter (22) an Erde liegt oder mit dem Leiter (22) verbunden ist und die Elektrodensegmente (14) an Erde liegen.

2. Vorrichtung nach Anspruch 1, **dadurch gekennzeichnet, daß** eine auf Erdpotential liegende zweite zylindrische Elektrode (32) die erste umgibt.

3. Vorrichtung nach Anspruch 1 oder 2, **dadurch gekennzeichnet, daß** eine Summierstufe vorhanden ist, welche die Strommeßwerte aller Elektrodensegmente (14) addiert zur Bestimmung der Kapazität des Kabels.

4. Vorrichtung nach einem der Ansprüche 1 bis 3, **dadurch gekennzeichnet, daß** den Strommeßvorrichtungen (40, 42, 44) eine Schwellwerstufe zugeordnet ist, die anzeigt, wenn der Strom einen vorgegebenen Wert überschreitet.

## Claims

1. A device for measuring the eccentric dislocation of the conductor (22) of a cable (20) in the cable covering (24), with at least three electrically conducting, circular arc shaped electrode segments (14) which are arranged displaced on the circumference of the cable (20), are arranged on a circle around the cable (20) and are insulated against one another, with a high frequency voltage source (38) for producing an alternating field between the conductor (22) and the electrode segments (14) and with an evaluation device which from the size of the current between the conductor (22) and the electrode segments (14) evaluates the size of the dislocation of the conductor (22), **characterised in that** a cylindrical container (12) filled with water is present, whose walling is formed by the electrode segments (14), the electrode segments (14) are surrounded by a cylindrical electrode (28) which lies at the same potential as the electrode segments (14) and to the electrode segments (14) in each case there is allocated a current measuring device (40, 42, 44) for measuring the current flowing to the individual electrode segments (14), the high frequency voltage source (38) being connected to the electrode segments (14) and the conductor (22) being connected with earth or being connected with the conductor (22) and the electrode segments (14) being connected with earth.

2. A device according to claim 1, **characterised in that** a second cylindrical electrode (32) lying at earth potential surrounds the first.

3. A device according to claim 1 or 2, **characterised in that** a summing step is present which adds the current readings of all electrode segments (14) for determining the capacitance of the cable.

4. A device according to one of the claims 1 to 3, **characterised in that** to the current measuring devices (40, 42, 44) there is allocated a threshold value step which indicates when the current has reached a predetermined value.

## Revendications

1. Dispositif de mesure du décalage excentrique du conducteur (22) d'un câble (20) dans une enveloppe de câble (24), comportant au moins trois segments d'électrode en forme d'arc de cercle (14), conducteurs de l'électricité, isolés les uns des autres, disposés avec un décalage sur la périphérie du cable (20), et disposés sur un cercle entourant le câble (20), une source de tension à haute fréquence (38) destinée à créer un champ alternatif entre le conducteur (22) et les segments d'électrode (14), et un dispositif d'interprétation qui détermine, à partir du niveau du courant existant entre le conducteur (22) et les segments d'électrode (14), la grandeur du décalage du conducteur (22), **caractérisé en ce qu'**il existe une enceinte cylindrique (12) pleine d'eau, dont les parois sont formées par les segments d'électrode (14), **en ce que** les segments d'électrode (14) sont entourés par une électrode cylindrique (28) qui est au même potentiel que les segments d'électrode (14), et **en ce qu'**à chacun des segments d'électrode (14) est associé un dispositif de mesure de courant (40, 42, 44) destiné à mesurer le courant circulant vers les différents segments d'électrode (14), la source de tension à haute fréquence (38) étant reliée aux segments d'électrode (14), le conducteur (22) étant mis à la terre, ou la source de tension (38) étant reliée au conducteur (22), les segments d'électrode (14) étant mis à la terre.

2. Dispositif suivant la revendication 1, **caractérisé en ce qu'**une deuxième électrode cylindrique (32) portée au potentiel de terre entoure la première électrode.

3. Dispositif suivant la revendication 1 ou 2 **caractérisé en ce qu'**il existe un étage de sommation qui, pour déterminer la capacité du câble, additionne les valeurs des courants de tous les segments d'électrode (14).

4. Dispositif suivant l'une des revendications 1 à 3, **caractérisé en ce qu'**aux dispositifs de mesure de courant (40, 42, 44), est associé un étage de détermination de valeur de niveau, qui indique si le courant dépasse une valeur prédéfinie.
